# EUROPEAN PATENT SPECIFICATION

(11) **EP 3 763 090 B1**
(45) Date of publication and mention of the grant of the patent: **01.05.2024**
(21) Application number: 19712878.8
(22) Date of filing: 08.03.2019
(51) Int. Cl.: H04L 12/28, H05B 47/19

(54) **SMART LIGHT SWITCH/THERMOSTAT FOR CONTROL AND ENERGY MANAGEMENT**
INTELLIGENTER LICHTSCHALTER/THERMOSTAT ZUR STEUERUNG UND ENERGIEVERWALTUNG
INTERRUPTEUR D'ÉCLAIRAGE/THERMOSTAT INTELLIGENT POUR LA COMMANDE ET LA GESTION D'ÉNERGIE

(30) Priority: 09.03.2018 US 201862641084 P
(43) Date of publication of application: 13.01.2021
(73) Proprietor: Savant Systems, Inc., Hyannis, MA 02601 (US)
(72) Inventor: MADONNA, Robert P., Osterville, Massachusetts 02655 (US); ESCHHOLZ, Siegmar K., Osterville, Massachusetts 02655 (US); DILLON, William H., Osterville, Massachusetts 02655 (US)
(74) Representative: Meissner Bolte Partnerschaft mbB
(86) International application number: PCT/US2019/021397
(87) International publication number: WO 2019/173741

(56) References cited:
- US-A1- 2015 304 312
- US-A1- 2016 066 137
- US-A1- 2016 234 634
- US-A1- 2017 124 842
- US-A1- 2018 014 386
- US-A1- 2018 060 529

## Description

### BACKGROUND

### Technical Field

The present disclosure relates generally to control, monitoring, and optimization in multi-room properties (e.g., hotels), and more specifically to techniques for control and monitoring of in-room devices, as well as techniques for improved power optimization of battery-powered devices (e.g., electronic door locks).

### Background Information

Owners of multi-room properties (e.g., hotels having a number of guest rooms) typically aim to decrease operating costs while improving the guest experience. One source of operating cost is inefficient use of in-room climate control devices. Many multi-room properties deploy a packaged terminal air conditioner (PTAC) in each room, to permit individual control of heating, ventilation and air condition (HVAC) functions. A PTAC is a self-contained HVAC unit, which is typically electrically powered and has vents and heat sinks both inside and outside the room. PTACs in multi-room properties (e.g., hotels) are notorious for being left on, often set to extreme temperatures, for example, when a guest departs the room for the day, or after check out. Typically, the PTAC is only turned off, or reset to a reasonable level, when the guest returns to their room and finds it in an uncomfortable state, or when housekeeping staff cleans the room. In many multi-room properties, the operation is largely manual, with no centralized management, monitoring or control. A similar situation exists for many other types of in-room devices, for example, in-room lighting devices and A/V and entertainment devices. Light fixtures, televisions and other in-room devices are often left on when a guest departs the room, consuming power until they are manually turned off by the guest returning to the room or by housekeeping staff.

Another problem with many multi-room properties (e.g., hotels) is a lack of effective power optimization for certain battery-powered devices deployed in rooms. For example, an increasing number of properties have deployed battery-powered wireless personal area network (WPAN) devices. One increasingly common type of battery-powered WPAN device is a Bluetooth Low Energy (BLE) door lock that allows a guest to open the door using an application (app) on a mobile device (e.g., smartphone). Such door locks are often replacing conventional magnetic strip and radio frequency (RF) locks that use dedicated access cards. However, battery-powered WPAN devices (such as BLE door locks) are faced with a tradeoff between the length of listen intervals and battery life. In this context, a listen interval refers to a number of time units between instances when the device scans to receive incoming transmissions. In the case of BLE for door locks, power savings is achieved by aggressively power cycling, so there are long listen intervals. When the guest is present and tries to open a BLE door lock using an app on their mobile derive, a transmit interval of the mobile device must coincide with the listen interval on the BLE door lock, so a key exchange may be negotiated and the door opened. Typically, this leads to sizable latency, which can cause the device to feel unresponsive to a guest.

Some WPAN protocols, such as BLE, attempt to reduce this latency by establishing a connection (e.g., a BLE connection) and negotiating transmit and listen intervals to coincide with an agreed to connection interval. A master device (e.g., the BLE door lock) sends out connectable advertising transmissions at an advertising interval, which is often long to reduce power consumption, and accepts incoming connections from a slave device (e.g., the mobile device). The mobile device scans for the advertisements at a scanning interval, and only upon receiving a connectable advertising transmission requests the connection. Once the connection is established, communication takes place according to the agreed connection interval, and subsequent communication can take place more efficiently. However, mobile devices are transient, decreasing the advantages of connections. In use, connections typically need to be frequently reformed, so the efficiencies from a negotiated connection interval cannot fully be realized. Accordingly, low latency and long battery life for battery-powered WPAN devices (e.g., battery-powered BLE door locks) has proved elusive.

Accordingly, there is a need for improved techniques for control, monitor and optimize in-room devices, as well as techniques for improved power optimization and latency reduction for battery-powered devices (e.g., battery-powered BLE door locks). A building automation system with a room controller interacting with a user via a touch display and interacting with a central building controller is known from patent application US 2017/124842 A1.

### SUMMARY

In one embodiment, a smart light switch/thermostat is provided for deployment in rooms of a multi-room property (e.g., hotel) that is capable of controlling, monitoring and optimizing the operation of in-room devices (e.g., climate control devices such as PTACs, lighting devices, A/V devices, etc.), as well as improving power optimization and reducing latency of certain battery-powered devices. The smart light switch/thermostat may be an in-wall device mounted in an electrical box (e.g., a 1-gang box) that maintains network connections (e.g., wired, WPAN and/or WLAN connections) to in-room devices, as well as to mobile guest devices and a central host controller that provides access to cloud control services. A guest mobile device may execute a guest mobile app that, when in possession of a time-limited authentication key, is permitted to issue service requests to the smart light switch/thermostat to control and monitor the room. The central host controller controls, monitors and optimizes of in room devices through the smart light switch/thermostats in multiple rooms. The central host controller may also interface with on-property staff devices usable to control and monitor multiple rooms of the property, and interface with cloud control services that enable offsite control and monitoring.

In addition to such functionality, in some embodiments, the smart light switch/thermostat may improve power optimization and reduce latency of battery-powered WPAN devices (e.g., BLE door locks) by operating as an agent for the room. The smart light switch/thermostat may open a connection over the WPAN (e.g., BLE) with a battery-powered WPAN device (e.g., battery-powered BLE door lock) using a long negotiated connection interval (e.g., hundreds of milliseconds) to permit the battery-powered WPAN device to be in an off state for a substantial portion of the time, and then send connectable advertising transmissions over the WPAN on behalf of the device at a very short advertising interval (e.g., 20 milliseconds) to increase the odds of coinciding with a scanning interval of a mobile device, such as a guest mobile device.

It should be understood that a variety of additional features and alternative embodiments may be implemented other than those discussed in this Summary. This Summary is intended simply as a brief introduction to the reader for the further description that follows, and does not indicate or imply that the examples mentioned herein cover all aspects of the disclosure, or are necessary or essential aspects of the disclosure.

### BRIEF DESCRIPTION OF THE DRAWINGS

The description below refers to the accompanying drawings of example embodiments, of which:
Fig. 1 is a block diagram of an example architecture of a smart control and energy management system for use in a property (e.g., a hotel) having a number of rooms (e.g., guest rooms);
Fig. 2A is a block diagram of the internal components of a first example embodiment of the smart light switch/thermostat;
Fig. 2B is a block diagram of the internal components of a second example embodiment of the smart light switch/thermostat;
Fig. 3A is a screen shot of an example overview screen showing property-wide occupancy, energy usage and temperature status that may be generated from data of a property database;
Fig. 3B is a screen shot of an example room-specific screen showing occupancy, energy usage and temperature status for a selected room that may be accessed by selecting one of the rooms indicated on the overview screen of Fig. 3A;
Fig. 4 is a flow diagram of an example sequence of steps that may be executed at a guest check in;
Fig. 5 is a flow diagram of an example sequence of steps that may be executed at a guest check out;
Fig. 6 is a flow diagram of an example sequence of steps that may be executed for a guest temperature set point change in a room;
Fig. 7 is a flow diagram of an example sequence of steps that may be executed to perform trouble shooting and manage in-room device replacement; and
Fig. 8 is a flow diagram of an example sequence of steps that may be executed to run system reports and trigger notifications.

### DETAILED DESCRIPTION

### Example System Architecture

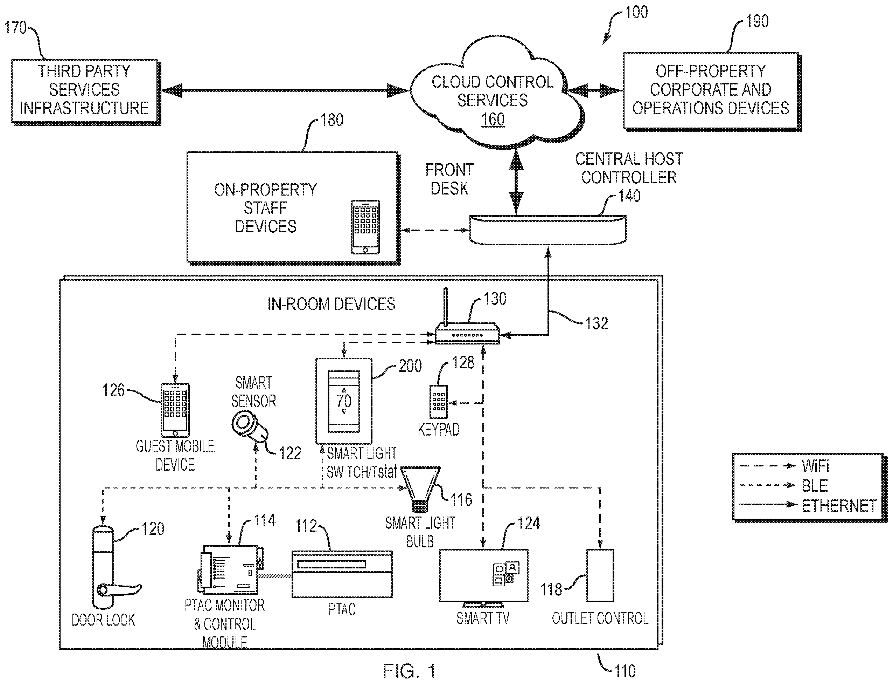

Fig. 1 is a block diagram of an example architecture 100 of a smart control and energy management system for use in a property (e.g., a hotel) having a number of rooms (e.g., guest rooms). The system 100 includes in-room devices 110 that are located within each room, a central host controller 140 that may be located at a front desk or other centralized location, cloud control services 160 that are remotely hosted (e.g., on an on-demand cloud computing platform) and remotely accessible to the host control 140 over the Internet, on-property staff devices 180 that may be used by management, guest services, maintenance, housekeeping or other staff and off-property corporate and operations devices that may be used by corporate or operations personnel.

The in-room devices 110 include a smart light switch/thermostat 200 that is responsible for real-time monitoring, controlling and reporting the conditions in the respective room. The smart light switch/thermostat 200 may issue control commands to, and receive state and environmental information from, the other in-room devices. In one embodiment, the smart light switch/thermostat 200 is an in-wall device mounted in an electrical box (e.g., a 1-gang box). It both derives power from in-wall (e.g., 120 volt) alternating current (A/C) wiring, and is capable of switching the AC via a power relay to at least one load (e.g., a light fixture wired through the smart light switch/thermostat 200). The smart light switch/thermostat 200 may include a screen (e.g., a touch sensitive LCD screen) that encompasses a substantial portion of its front face and is configured to provide a portion of a user interface. Other portions of the front face may be occupied by one or more physical buttons and light emitting diodes (LEDs) that complete the user interface. The user-interface may receive input for controlling the other in-room devices and display state and environmental information received therefrom. Internally, the smart light switch/thermostat 200 may include one or more wireless interfaces (e.g., a wireless WPAN interface such as a BLE radio and a wireless local area network (WLAN) interface such as a Wi-Fi radio), a processor, a memory, the above mentioned power relay, and other hardware.

A number of other in-room devices may interface directly with the smart light switch/thermostat 200 via dedicated wiring, a WPAN (e.g., BLE), or a WLAN (e.g., WiFi) provide by a nearby (e.g., an in-room or in-hall) access point 130, and receive control commands and provide state and environmental information directly thereto. Such devices may include climate control devices, lighting devices, sensor devices, security devices, certain A/V and entertainment devices, and/or other types of devices. Other in-room devices may (at least in some cases) interface with the central host controller 140 and/or cloud control services 160, such that control commands and state and environmental information is provided through an intermediate. Such devices may include guest mobile devices 126, remote controls, dedicated keypads, certain other certain A/V and entertainment devices, and other types of devices.

The climate control devices that interface with the smart light switch/thermostat 200 may include a PTAC 112 or a PTAC monitor and control module 114. In some implementations (e.g., where the smart light switch/thermostat 200 replaces a wired thermostat), the PTAC 112 may be coupled by standard thermostat control wiring to an interface of the smart light switch/thermostat 200, and the smart light switch/thermostat 200 may directly control the PTAC. In other implementations (e.g., where the smart light switch/thermostat 200 replaces on-unit controls), the light switch/thermostat 200 may communicate via the WPAN (e.g., BLE) or WLAN (e.g. WiFi) with a PTAC monitor and control module 114 wired to the PTAC 112, which acts as a two-way capable interface between the smart light switch/thermostat 200 and the PTAC 112. The PTAC monitor and control module 114 may include one or more relays that drive conventional HVAC wiring (e.g., W1, W2, Y1, Y2, G, O), at least one auxiliary relay (e.g., for a NO terminal, NC terminal and COM terminal), status and onboarding LEDs, and a wireless interface (e.g., a BLE radio and/or WiFi radio), among other components. Use of a PTAC monitor and control module 114 may permit the smart light switch/thermostat 200 to be located in any convenient location within the room, absent a need to run thermostat control wiring to the PTAC.

The lighting devices that interface with the smart light switch/thermostat 200 may include one or more smart light bulbs 116 that communicate via the WPAN (e.g., BLE). Each smart light bulb 116 may be individually activated, dimmed, and/or have its color changed in response to control commands from the smart light switch/thermostat 200. The lighting devices may also include one or more outlet controls (also referred to as "lamp modules") 118 that communicate via a WLAN (e.g., WiFi). As used herein, the term "outlet control" refers to a device that is placed intermediate between an electrical outlet and a load (e.g., a lamp) and controls activation and/or dimming level in response to commands.

The sensors that interface with the smart light switch/thermostat 200 may include a passive infrared (PIR) occupancy sensor, an active ultrasonic occupancy sensor, a humidity sensor, various types of automation state sensors and the like. In some implementations, at least some sensors (e.g., the passive infrared (PIR) occupancy sensor) are built into the smart light switch/thermostat 200 and communicate via an internal bus of the device. Other sensors, for example, housed in a separate smart sensor unit 122, may communicate with the smart light switch/thermostat, for example, via a WPAN (e.g., BLE).

The security devices that interface with the smart light switch/thermostat 200 may include an electronic door lock 120, for example, a battery-powered WPAN (e.g. BLE) door lock. As discussed below, in some implementations the smart light switch/thermostat 200 may operate as an intermediary agent, maintaining a connection to the battery-powered WPAN device (e.g., battery-powered BLE door lock), while advertising on its behalf to a guest mobile device (e.g., smartphone), in order to achieve power optimization and low latency.

The A/V and entertainment devices that interface with the smart light switch/thermostat 200 may include a smart television (TV) 124 and an A/V controller (not shown) that communicates via a WPAN (e.g., BLE) or WLAN (e.g., WiFi). The A/V controller may interface with a number of less-capable A/V and entertainment devices, for example, a standard TV, cable box, DVD player, etc. and in response to control commands emit appropriate signals (e.g., infrared (IR) signals) to interact with and control the devices.

A guest mobile device may either interface with the smart light switch/thermostat 200 or may communicate with the central host controller 140 and cloud control services 160. One type of guest mobile device is a smartphone 126 running a guest mobile control app for controlling in-room devices 110 when authorized. The guest mobile control app may receive a time-limited authentication key that permits it to control the in-room devices and display state and environment information therefrom for a specific period of time (e.g., when a guest has reserved the room), and prevent control and access at other times. The time-limited authentication key may be included in service requests sent by the guest mobile control app. If the guest uses the smartphone 126 in the room and WLAN access (e.g., WiFi access) is available, the mobile control app may communicate with the smart light switch/thermostat 200 via the WLAN, which may verify the time-limited authentication key and issue control commands, or return the state and environmental information, indicated by the service request. However, there may be instances where the guest does not have access to the WLAN. For example, the guest may be off-property, may have not configured their mobile device to utilize the WLAN (e.g., via a require registration or log-in procedure), wireless networking may be turned off, etc. In such cases, the mobile control app on the guest mobile device may communicate via a broadband cellular network (e.g., 4G, 5G, etc.) with cloud control services 160, which may verify the time-limited authentication key against a present time and then relay control service requests to the smart light switch/thermostat 200 and/or issue control commands directly to in-room devices, via the central host controller 140, and pass back relevant state and environmental information.

Other types of devices may also communicate with the central host controller 140 and cloud control services 160, including a remote control, dedicated keypad 128 and certain A/V and entertainment devices. The central host controller 140 may be responsible for driving a control user interface (e.g., an on screen display (OSD)) used in conjunction with the remote control, as well as support other user interface functions.

A wide variety of other types of in-room devices may interface with the smart switch/thermostat 200 or communicate with the central host controller 140 and cloud control services 160. Such other in-room devices may include voice control devices (e.g., Amazon Echo^{®} or Amazon Dot^{®} voice control devices), media streaming devices (e.g., Sonos^{®} smart speakers, Apple TV^{®} streaming media players, Roku^{®} streaming media players, etc.), automatic shade or blind systems, motor or relay actuated devices, fire alarm systems, third-party automation or sensor systems, as well as a variety of other types of devices.

The central host controller 140 may manage high-level automation and control for the entire property, interfacing with the smart switch/thermostat 200 (and certain other in-room devices) in each room via a wired local area network (LAN) (e.g., Ethernet) 132 and/or a WLAN (e.g., WiFi). High-level automation and control may include changing in-room device states in response to a schedule (e.g., changing climate control temperature settings at night), in response to device or environmental states (e.g., lowering climate control temperature when the lights in a room are off or if temperature exceeds a given threshold), in response to presence or occupancy information (e.g., deactivating in-room devices to conserve energy when the room is vacant), etc. The central host controller 140 may further interface with on-property staff devices (e.g., tablet computers, smartphones, notebook or desktop computers and/or other devices used by on-site management, guest services, maintenance, and housekeeping staff) via a WLAN (e.g. WiFi). On-property staff devices may provide a user interface for making manual adjustments to in-room device states and viewing state and environmental information across multiple rooms of the property.

In general, the central host controller 140 operates as a connection point for administration and monitoring, manages user interfaces, and provides a conduit to cloud control services 160. The smart switch/thermostat 200 (and certain other in-room devices 110) in each room may communicate via the central host controller 140 with cloud control services 160 using a combination of persistent encrypted WebSocket communication and representational state transfer (REST) application program interfaces (APIs). Control commands may be transmitted in either direction via a WebSocket brokered at the central host controller 140. State and environmental information may be transmitted via REST APIs.

In some cases, the central host controller 140 may maintain a local copy of a property database, that stores configurations of the smart switch/thermostat 200 (and certain of the other in-room devices 110) in each room of the property, in-room real-time status (e.g. real-time state and environmental information such as HVAC state, lighting state, A/V state, temperature, light level, etc. ) and historic metrics (such as past patterns of device usage, past temperate average, HVAC cycling information, etc.), presence and occupancy data, staff permissions and access information, as well as other types of data. A primary copy of the property database may be maintained by cloud control services 160. In other cases, only the primary copy may be maintained by cloud control services 160 and the host controller may simply access the database when needed.

Cloud control services 160 (e.g., on an on-demand cloud computing platform accessible over the Internet) may provide remote monitoring, control and data storage functions for the property and potentially other related properties (e.g., of a hotel chain). Cloud control services 160 may also interact with third-party services infrastructure 170 related to the property and off-property corporate and operations devices (e.g., tablet computers, smartphones, notebook or desktop computers and/or other devices used by corporate or operations personnel) 190. The cloud control services 160 include a number of functional modules, including a WebSocket services module, an API services module (e.g., supporting REST as well as other types of transfer), an integration nexus that manages inbound and outbound events, and a data storage module that stores data in the property database (e.g., utilizing SQL) and provides caching functionality, as well as other functional modules, all coupled to a messaging bus.

On-property staff using on-property staff devices 180 interacting with the central host controller 140, and off-property corporate or operations personnel using off-property corporate and operations devices 190 interacting with cloud control service 160, may access a central management portal that provides operations, oversight and maintenance information for rooms in the property (or in some cases, a number of properties). The information and functionally displayed in the user interface may be customized and/or limited based on the permissions dependent on the role (e.g., front desk employee, chief operating officer, etc.) and scope of responsibility (e.g., local property only, regional, national, etc.) of the staff or personnel. A wide variety of types of information may be provided per-room, for multiple-rooms of a single-property, or for multiple-room of multiple-properties, including status and health, real-time statistics and analytics such as occupancy and temperature and energy use, event histories, as well as other types of information. Functionality may include, remote in-room device control and power cycling, device configuration and update push functions, the ability to configure automated alerts and notifications if certain thresholds are breached or trends determined, the ability to define maintenance schedules, and report generation, among others.

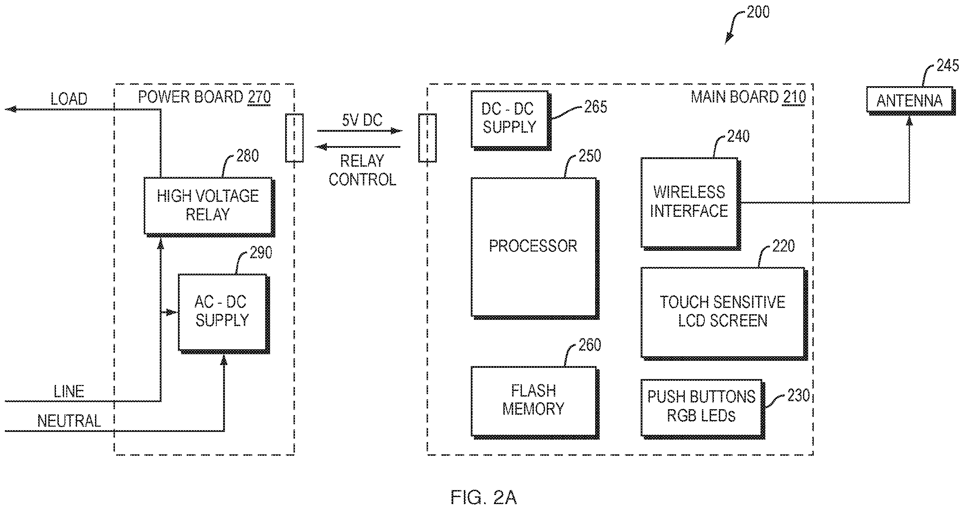

Fig. 2A is a block diagram of the internal components of a first example embodiment of the smart light switch/thermostat 200. The first embodiment may be adapted to deriving power from in-wall AC wiring that has a neutral wire (i.e. line, load, and neutral conductors). A main board 210 of the smart light switch/thermostat 200 includes a touch sensitive LCD screen 220 for displaying a portion of the user interface; one or more physical buttons and one or more red green blue (RGB) LEDs 230 that also are part of the user interface; a wireless interface 240 coupled to an antenna 245, which may include combined WPAN (e.g., BLE) and WLAN (e.g., Wi-Fi) radio for interfacing with other in-room devices and an access point; a processor 250 that drives the user interface on the LCD screen 220, and deciphers received input; a memory (e.g. a FLASH memory) 260 that stores control code and firmware for execution on the processor for implementing the functionality of the smart light switch/thermostat 200; and a direct current (DC) to DC power supply 265. A power board 270 of the smart light switch/thermostat 200 is coupled to the main board 210 via DC current and relay control wires, and includes a power relay 280 that switches the line conductor to the load conductor (e.g., to power a light fixture wired through the smart light switch/thermostat 200) and an AC to DC power supply 290 that powers the smart light switch/thermostat 200 using the line conductor and the natural conductor.

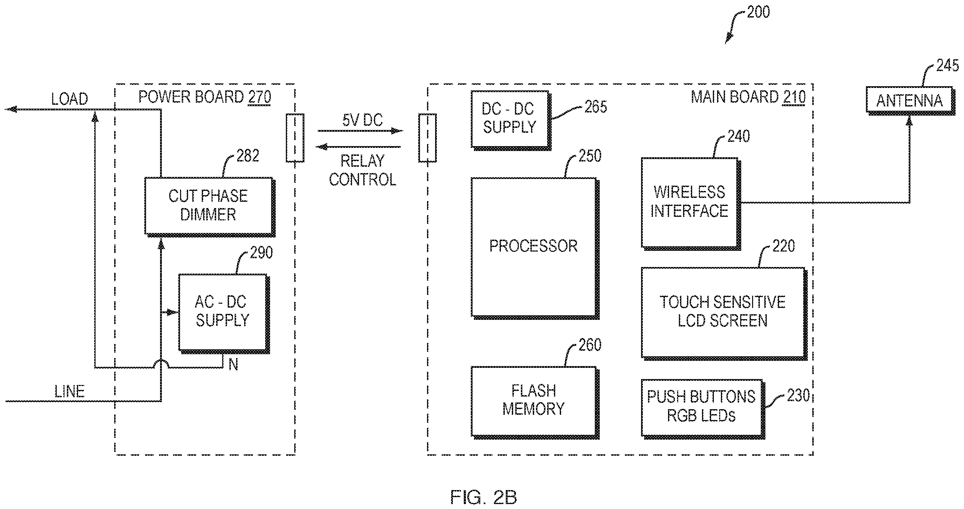

Certain older structures may have in-wall wiring that lacks a neutral conductor (i.e., there is only line and load conductors). The lack of a neutral may present problems for the example embodiment of the smart light switch/thermostat 200 shown in Fig. 2A, as it becomes more difficult to power the AC to DC power supply 290. Fig. 2B is a block diagram of the internal components of a second example embodiment of the smart light switch/thermostat 200. The second embodiment is similar to the first, with the exceptions that instead of a power relay 280 a phase cut dimmer 281 is employed, and the AC to DC power supply 290 is coupled to the load conductor. When the light switch/thermostat 200 is in an off position (i.e. a light fixture or other device coupled to the smart light switch/thermostat 200 is intended to be off), the load conductor is used as a neutral. The phase cut dimmer 282 allows a small amount of power to flow to the load conductor, permitting the AC to DC power supply 290 to be powered, but being insufficient to illuminate (at least in a visually perceptible manner) the light fixture or activate another type of device coupled to the smart light switch/thermostat 200. When the light switch/thermostat 200 is in an on position (i.e. a light fixture or other device coupled to the smart light switch/thermostat 200 is intended to be on), the phase cut dimmer 282 cuts power to the light fixture or other device periodically (e.g., for a couple milliseconds) to power the AC to DC power supply 290. This brief interruption may be imperceptible to a guest.

### Example Central Management Portal User Interface

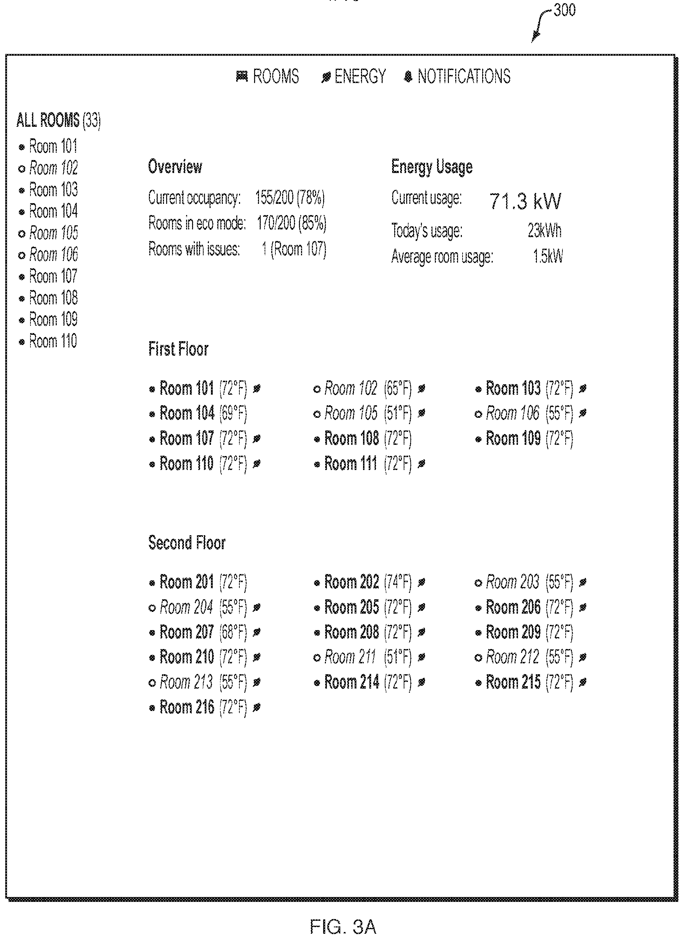

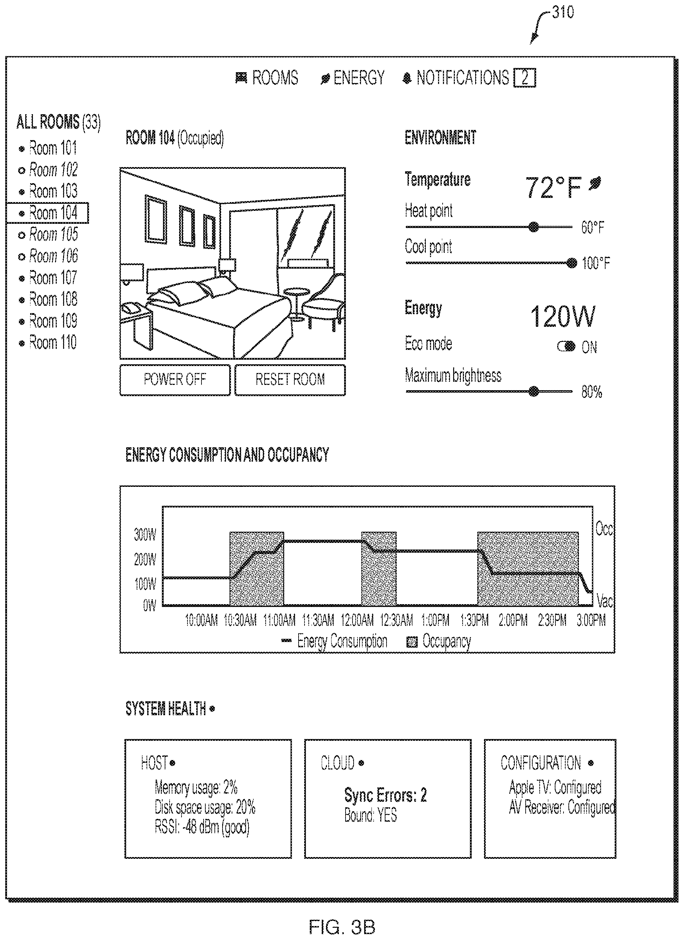

As discussed above, the central management portal may provide on-property staff and off-property corporate or operations personnel a variety of operations, oversight and maintenance information and functionality. Fig. 3A is a screen shot of an example overview screen 300 showing property-wide occupancy, energy usage and temperature status that may be generated from data of a property database. Fig. 3B is a screen shot of an example room-specific screen 310 showing occupancy, energy usage and temperature status for a selected room that may be accessed by selecting one of the rooms indicated on the overview screen 300 of Fig. 3A. In addition to providing real-time status information for the room, the room-specific screen 310 may show historic data. Additionally, controls may be provided for directly controlling in-room devices to change climate control set points or change device state (e.g., turning lighting, music, etc. on or off).

### Example Operations, Oversight and Maintenance Transactions

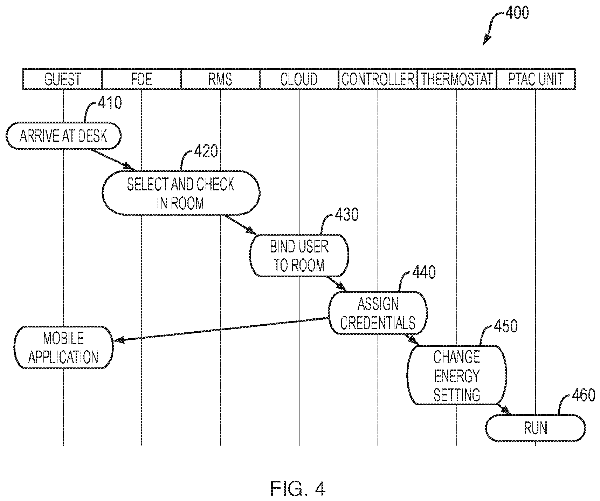

Fig. 4 is a flow diagram of an example sequence of steps that may be executed at a guest check in. At step 410, a guest arrives at a front desk of the property and speaks with a front desk employee (FDE). If the guest has not already done so, they may download a mobile control app onto their mobile device (e.g., smartphone 126). At step 420, the FDE uses a third-party room management system (RMS) or other third-party services infrastructure 170 to check the guest in. The RMS/third party services infrastructure notifies cloud control services 160. The guest may be assigned a guest identifier (ID), which, at step 430, is bound to a room ID of the room in the property database maintained on cloud control services 160. At step 440, the central host controller 140 assigns credentials, including a limited time authentication key to the mobile control app on the guest mobile device (e.g., smartphone 126), that enables the mobile control app to control the smart light switch/thermostat 200 and other in-room devices for the duration of their stay. At step 450, the central host controller 140 sends control commands to the smart light switch/thermostat 200 to change temperature and other climate settings to a comfortable level, to prepare for guest arrival. Optionally, the central host controller 140 may also send control commands to the smart light switch/thermostat 200, or directly to other in-room devices 110, to change state (e.g., lighting, music, etc.) to prepare for guest arrival. At step 460, the climate control device (e.g., PTAC), and optionally other in-room devices 110, execute the commands.

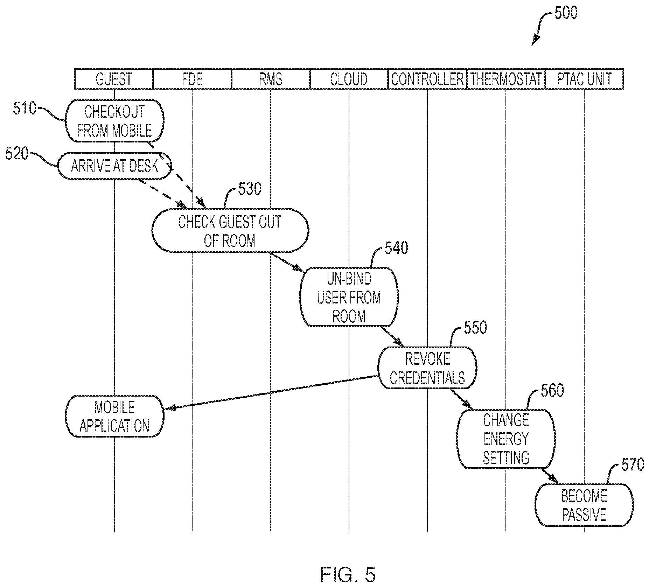

Fig. 5 is a flow diagram of an example sequence of steps 500 that may be executed at a guest check out. At step 510, a guest initiates a mobile check out from their mobile device (e.g., smartphone 126). Alternatively, at step 520, the guest arrives at the front desk of the property, and speaks with an FDE. At step 530, in response to input on the mobile device (e.g., smartphone) or by the FDE, a RMS or other third-party services infrastructure 170 checks the guest out of the room. The RMS/third party services infrastructure notifies cloud control services 160, which, at step 540, unbinds the guest ID from the room ID in the property database. At step 550, the central host controller 140 revokes the guest's credentials, including explicitly clearing the limited time authentication key that once enabled the mobile control app to control the smart light switch/thermostat 200 and other in-room devices. At step 560, the central host controller 140 sends control commands to the smart light switch/thermostat 200 to change temperature and other climate settings to an economy mode that minimizes power consumption. Optionally, the central host controller 140 may also send control commands to the smart light switch/thermostat 200, or directly to other in-room devices 110, to change state (e.g., lighting, music, etc.) to an off or reduced power state. At step 570, the climate control device (e.g., PTAC), and optionally other in-room devices 110, execute the commands. The climate control devices (e.g., PTAC) may become passive (e.g., allowing temperature to vary in a wide band) while in the economy mode.

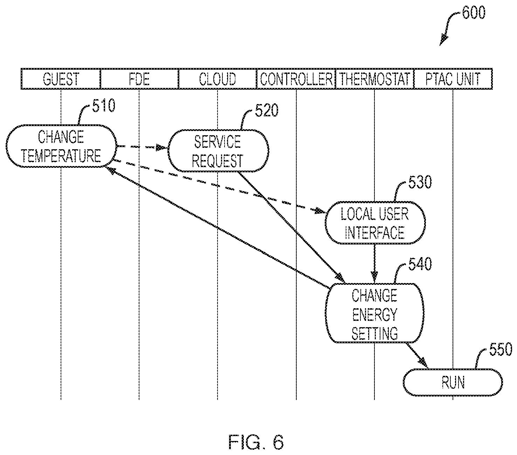

Fig. 6 is a flow diagram of an example sequence of steps 600 that may be executed for a guest temperature set point change in a room. At step 610, a guest initiates a temperature set point change operation, using either the mobile control app on their mobile device (e.g., smartphone 126) or the user interface of the smart light switch/thermostat 200. If using the mobile control app, the mobile device (e.g., smartphone 126) sends a service request to cloud control services 160, which, at step 620, issues a service request via the central host controller 140 to the smart light switch/thermostat 200. Otherwise, at step 630, the smart light switch/thermostat 200 is directly informed via its user interface. At step 640, the smart light switch/thermostat 200 issues control commands to change the temperature set point in the room. At step 650, the climate control device (e.g., PTAC) executes the commands. Feedback may be provided to the mobile control app acknowledging the new temperature set point for the room.

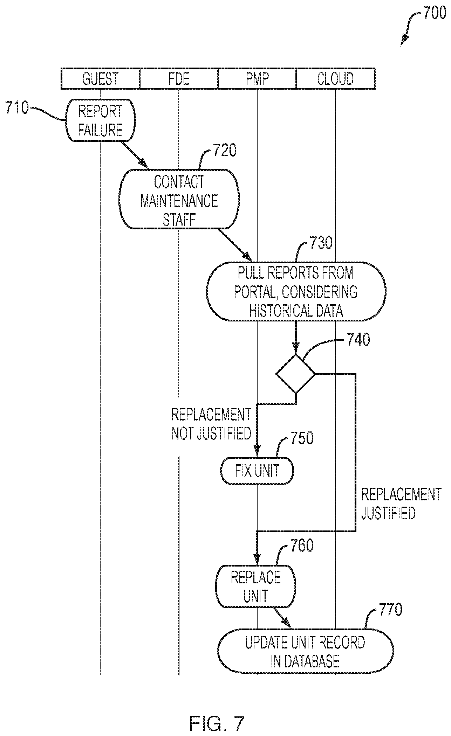

Fig. 7 is a flow diagram of an example sequence of steps 700 that may be executed to perform trouble shooting and manage in-room device 110 replacements. At step 710, a guest reports that an in-room device, such as a climate control device (e.g., PTAC), is not operating as expected. At step 720, a FDE contacts a property maintenance professional (PMP). The PMP may use an on-property staff device 180 to access the central management portal. At step 730, the PMP uses the central management portal to retrieve historic metrics from the property database maintained by cloud control service 160. For example, in the case of a suspected-faulty climate control device (e.g., PTAC), historic temperatures may be retrieved and plotted to highlight degradation of performance. At step 740, a decision is made whether replacement is justified or repair is possible. If replacement is not justified, the PMP may repair the in-room device at step 750. Alternative, if replacement is justified, the PMP may replace the unit at step 760. The PMP may use the central management portal, at step 770, to update a device record (e.g., indicating make, model, serial number, etc.) stored in the property database.

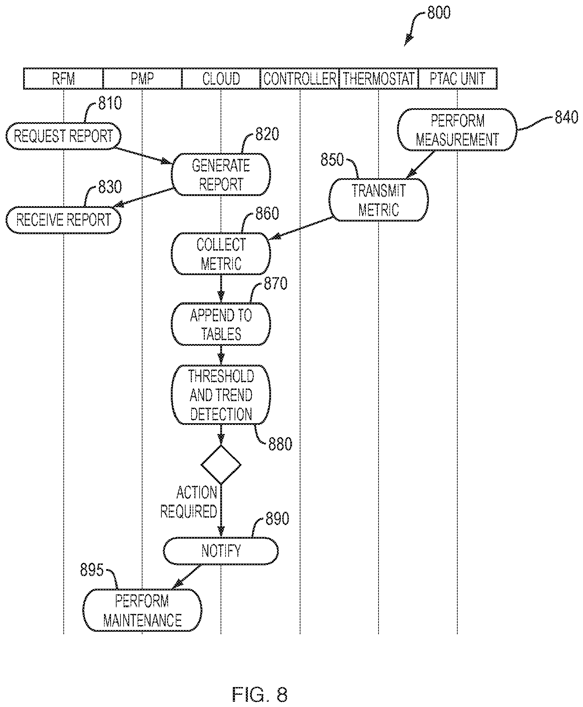

Fig. 8 is a flow diagram of an example sequence of steps 800 that may be executed to run system reports and trigger notifications. At step 810, a region facilities manager (RFM) or other corporate or operations personnel may utilize an off-property corporate or operations device to access the central management portal and request a report. A variety of types of reports may be supported, focusing on system downtime, energy usage (by room, property, region, etc.), in-room device status, in-room device room performance, and maintenance metrics, among others. At step 820, the cloud control service 160 accesses the property database and retrieves the necessary metrics. At step 830, the central management portal formats and presents the requested report. In parallel, performance metrics are continuously collected for each room, the property database updated, and notifications issued as required. At step 840, in-room devices measure environmental conditions and their own state, and provide them to the smart light switch/thermostat 200. At step 850, the smart light switch/thermostat 200 compiles metrics and uploads the metrics to cloud control services 160, via the central host controller 140. At step 860, cloud control services 160 collects metrics for rooms across a property (and potentially multiple properties) and, at 870, appends the metrics to the property database. At step 880, cloud control services 160 compares the metrics against predefined thresholds and/or trends, and, at step 890, determines whether action is required (e.g., one or more in-room devices are operating abnormally). If action is required, at step 890, the cloud control services 160 may send a notification to third-party services infrastructure 170, which may cause, at step 895, appropriate staff to be dispatched to perform maintenance or take other action.

### WPAN Device Power Optimization

As mentioned above, the central host controller 140 may be utilized to optimize power consumption of some battery-powered WPAN (e.g., BLE) devices in the room (e.g., a battery-powered BLE door lock that allows guests to gain access using an app on a mobile device (e.g., smartphone)). The smart light switch/thermostat 200 operates as an agent for the room, maintaining a connection to the battery-powered WPAN device (e.g., battery-powered BLE door lock) while advertising on its behalf to a guest mobile device (e.g., smartphone 126). The smart light switch/thermostat 200 maintains the open connection with the battery-powered WPAN device (e.g., battery-powered BLE door lock) using a negotiated connection interval. The connection interval may be long (e.g., hundreds of milliseconds) to permit the battery-powered WPAN device to be in an off state for a substantial portion of the time. The smart light switch/thermostat 200 further sends connectable advertising transmissions. The advertising interval may be very short (e.g., 20 milliseconds) to increase the odds of coinciding with a scanning interval of a mobile device, such as a guest mobile device (e.g., smartphone 126). When a user (e.g., guest) approaches the room and indicates they desire to change a state of the battery-powered WPAN device (e.g., actuate the battery-powered BLE door lock to lock or unlock the door lock), a connection to the smart light switch/thermostat 200 is established using a received connectable advertising transmission, and a data exchange (e.g., a key exchange) begins where data required to change the state of the battery-powered WPAN device is received by the smart light switch/thermostat 200. The smart light switch/thermostat 200 forwards the data (e.g., the key) over the existing connection to the battery-powered WPAN device (e.g., battery-powered BLE door lock) at the negotiated connection interval. In such manner, both low latency and long battery life for the battery-powered WPAN device (e.g., battery-powered BLE door lock) may be achieved.

### Conclusions

It should be understood that various adaptations and modifications may be made to the above discussed techniques for power optimization. While it is discussed above that an example multi-room property may be a hotel, it should be remembered that the smart control and energy management system 100 may be used in a variety of other types of multi-room properties, such as senior housing facilities, hospitals, dormitories, apartment buildings, etc. Additionally, it should be understood that at least some of the functionality suggested above to be implemented in hardware may be implemented in software, and vice versa. In general functionality may be implemented in hardware, software or various combinations thereof. Hardware implementations may include logic circuits, application specific integrated circuits, and/or other types of hardware components. Software implementations may include electronic device-executable instructions (e.g., computer-executable instructions) stored in a non-transitory electronic device- readable medium (e.g., a non-transitory computer-readable medium), such as a volatile or persistent memory, a hard-disk, a compact disk (CD), or other tangible medium. Further, combined software/hardware implementations may include both electronic device-executable instructions stored in a non-transitory electronic device-readable medium, as well as one or more hardware components, for example, processors, memories, etc. Above all, it should be understood that the above embodiments are meant to be taken only by way of example. What is claimed is:

## Claims

1. A combined light switch and thermostat (200) for deployment in a room of a property, comprising:
a screen for displaying at least a portion of a user interface of the combined light switch and thermostat (200);
a power relay (280) configured to control alternating current, AC, power flow to at least one lighting device wired through the combined light switch and thermostat (200);
one or more network interfaces configured to communicate with one or more in-room devices (110) of the room of the property and a central host controller (140) that administers and controls a plurality of rooms of the property, wherein the one or more in-room devices (110) include at least a climate control device;
a processor (250) configured to execute control code;
a memory (260) configured to store the control code, wherein the control code when executed is operable to,
in response to user input in the user interface of the combined light switch and thermostat (200), control AC power flow to the least one lighting device wired through the combined light switch and thermostat (200) or issue control commands to the one or more in-room devices (110), and
in response to a service request from the central host controller (140), control A/C power flow to the least one lighting device wired through the combined light switch and thermostat (200) or issue control commands to the one or more in-room devices (110).

2. The combined light switch and thermostat (200) of claim 1, wherein the control code when executed is operable to display state and environmental information received over the one or more network interfaces from the one or more in-room devices (110) on the screen, and provide at least a portion of the state and environmental information over the one or more network interfaces to the central host controller (140).

3. The combined light switch and thermostat (200) of claim 1, wherein the one or more network interfaces are further configured to communicate with a guest mobile device (126) executing a guest mobile control application, app, and the control code when executed is further operable to:
receive a service request and a time-limited authentication key from the guest mobile control app;
verify the time-limited authentication key against a present time; and
in response to verification of the time-limited authentication key, issue control commands to the one or more in-room devices (110) or provide state and environmental information back to the guest mobile control app.

4. The combined light switch and thermostat (200) of claim 1, wherein the climate control device is a packaged terminal air conditioner, PTAC, and the one or more network interfaces are configured to communicate with the PTAC over thermostat control wiring or over a wireless personal area network, WPAN, with a PTAC monitor and control module coupled to the PTAC.

5. The combined light switch and thermostat (200) of claim 1, wherein the combined light switch and thermostat (200) is configured to be mounted in an in-wall electrical box and derive power from in-wall, AC, wiring.

6. The combined light switch and thermostat of claim 1, wherein the one or more in-room devices (110) include one or more sensor devices or audio/video, A/V, and entertainment devices, and the one or more network interfaces are configured to communicate with the one or more sensor devices or A/V and entertainment devices.

7. The combined light switch and thermostat (200) of claim 1, wherein the one or more in-room devices (110) include a battery-powered Bluetooth Low Energy, BLE, door lock of the room and the one or more network interfaces include one or more BLE interfaces configured to communicate over BLE with the battery-powered BLE door lock.

## Patentansprüche

1. Kombinierter Lichtschalter und Thermostat (200) zur Einrichtung in einem Raum einer Immobilie, umfassend:
einen Bildschirm zum Anzeigen mindestens eines Teils einer Benutzeroberfläche des kombinierten Lichtschalters und Thermostaten (200); ein Leistungsrelais (280), das so gestaltet ist, dass ein Energiefluss von Wechselstrom, AC, an mindestens eine durch den kombinierten Lichtschalter und Thermostaten (200) beschaltete Beleuchtungseinrichtung gesteuert wird;
eine oder mehrere Netzwerkschnittstellen, die so gestaltet sind, dass sie mit einem oder mehreren im Raum befindlichen Geräten (110) des Raumes der Immobilie und einem zentralen Host-Controller (140) in Verbindung stehen, welcher eine Vielzahl von Räumen der Immobilie verwaltet und steuert, wobei das eine oder mehrere im Raum befindliche Geräte (110) mindestens ein Klimaregelungsgerät umfassen;
einen Prozessor (250), der so gestaltet ist, dass ein Steuercode abgearbeitet wird;
einen Speicher (260), der so gestaltet ist, dass der Steuercode gespeichert wird, wobei der Steuercode bei Ausführung betriebsfähig ist, um als Reaktion auf eine Benutzereingabe auf der Benutzeroberfläche des kombinierten Lichtschalters und Thermostaten (200) einen AC-Stromfluss an die mindestens eine durch den kombinierten Lichtschalter und Thermostaten (200) beschaltete Beleuchtungseinrichtung zu steuern oder Steuerbefehle an das eine oder mehrere im Raum befindliche Geräte (110) auszugeben, und
als Reaktion auf einen Bedienungsaufruf vom zentralen Host-Controller (140) einen A/C-Stromfluss an die mindestens eine durch den kombinierten Lichtschalter und Thermostaten (200) beschaltete Beleuchtungseinrichtung zu steuern oder Steuerbefehle an das eine oder mehrere im Raum befindliche Geräte (110) auszugeben.

2. Kombinierter Lichtschalter und Thermostat (200) nach Anspruch 1, wobei der Steuercode bei Ausführung betriebsfähig ist, um auf dem Bildschirm Zustands- und Umgebungsinformationen anzuzeigen, die über die eine oder mehrere Netzwerkschnittstellen von dem einen oder mehreren im Raum befindlichen Geräten (110) empfangen werden, und mindestens einen Teil der Zustands- und Umgebungsinformationen über die eine oder mehrere Netzwerkschnittstellen an den zentralen Host-Controller (140) zu liefern.

3. Kombinierter Lichtschalter und Thermostat (200) nach Anspruch 1, wobei die eine oder mehrere Netzwerkschnittstellen des Weiteren so gestaltet sind, dass sie mit einem Gastmobilgerät (126) in Verbindung stehen, das eine Steueranwendung, App, des Gastmobilgerätes abarbeitet; und der Steuercode bei Ausführung außerdem betriebsfähig ist, um:
einen Bedienungsaufruf und einen befristeten Bestätigungsschlüssel von der Gastmobilgerät-Steuerapp zu empfangen;
den befristeten Bestätigungsschlüssel gegen eine aktuelle Zeit zu überprüfen; und
als Reaktion auf Überprüfung des befristeten Bestätigungsschlüssels Steuerbefehle an das eine oder mehrere im Raum befindliche Geräte (110) auszugeben oder Zustands- und Umgebungsinformationen zurück an die Gastmobilgerät-Steuerapp zu liefern.

4. Kombinierter Lichtschalter und Thermostat (200) nach Anspruch 1, wobei das Klimaregelungsgerät eine verpackte Terminalklimaanlage, PTAC, ist, und die eine oder mehrere Netzwerkschnittstellen so gestaltet sind, dass sie über die Thermostatsteuerverkabelung mit der PTAC oder über ein Wireless Personal Area Network, WPAN (drahtloses persönliches Netzwerk), mit einem Monitor der PTAC und einem mit der PTAC gekoppelten Steuermodul in Verbindung stehen.

5. Kombinierter Lichtschalter und Thermostat (200) nach Anspruch 1, wobei der kombinierte Lichtschalter und Thermostat (200) so gestaltet ist, um in einem Unterputz-Klemmkasten montiert zu werden und Strom von einer Unterputz-Wechselstromverkabelung abzuzweigen.

6. Kombinierter Lichtschalter und Thermostat nach Anspruch 1, wobei das eine oder mehrere im Raum befindliche Geräte (110) ein oder mehrere Sensorgeräte oder Audio-/Video- (AV) und Unterhaltungsgeräte einschließen, und die eine oder mehrere Netzwerkschnittstellen so gestaltet sind, um mit dem einen oder mehreren Sensorgeräten oder A/V- und Unterhaltungsgeräten in Verbindung zu stehen.

7. Kombinierter Lichtschalter und Thermostat (200) nach Anspruch 1, wobei das eine oder mehrere im Raum befindliche Geräte (110) eine batteriebetriebene, energiesparende Bluetooth-(BLE)-Türverriegelung des Raumes umfassen, und die eine oder mehrere Netzwerkschnittstellen eine oder mehrere BLE-Schnittstellen einschließen, die so gestaltet sind, dass sie über BLE mit der batteriebetriebenen BLE-Türverriegelung in Verbindung stehen.

## Revendications

1. Ensemble combiné d'interrupteur d'éclairage et de thermostat (200) à utiliser dans une pièce d'un immeuble, comprenant :
un écran pour afficher au moins une partie d'une interface utilisateur de l'ensemble combiné d'interrupteur d'éclairage et de thermostat (200) ;
un relais de puissance (280) configuré pour contrôler le flux de courant alternatif, CA, vers au moins un dispositif d'éclairage câblé par l'intermédiaire de l'ensemble combiné d'interrupteur d'éclairage et de thermostat (200) ;
une ou plusieurs interfaces réseau configurées pour communiquer avec un ou plusieurs dispositifs (110) internes à la pièce de l'immeuble et avec un contrôleur hôte central (140) qui gère et contrôle une pluralité de pièces de l'immeuble, ledit ou lesdits dispositifs internes (110) comprennent au moins un dispositif de contrôle du climat ;
un processeur (250) configuré pour exécuter un code de contrôle ;
une mémoire (260) configurée pour stocker le code de contrôle, le code de contrôle, lorsqu'il est exécuté, permettant
en réponse à une entrée utilisateur dans l'interface utilisateur de l'ensemble combiné d'interrupteur d'éclairage et de thermostat (200), de contrôler le flux de courant alternatif CA vers ledit au moins un dispositif d'éclairage câblé par l'intermédiaire de l'ensemble combiné d'interrupteur d'éclairage et de thermostat (200), ou d'émettre des instructions de contrôle vers ledit ou lesdits dispositifs internes (110), et
en réponse à une demande de service provenant du contrôleur hôte central (140), de contrôler le flux de courant alternatif CA vers ledit au moins un dispositif d'éclairage câblé par l'intermédiaire de l'ensemble combiné d'interrupteur d'éclairage et de thermostat (200), ou d'émettre des instructions de contrôle vers ledit ou lesdits dispositifs internes (110).

2. Ensemble combiné d'interrupteur d'éclairage et de thermostat (200) selon la revendication 1,
dans lequel le code de contrôle, lorsqu'il est exécuté, permet d'afficher sur l'écran des informations sur l'état et l'environnement reçues par l'intermédiaire de ladite ou desdites interfaces réseau à partir dudit ou desdits dispositifs internes (110), et de fournir au contrôleur hôte central (140) au moins une partie des informations sur l'état et l'environnement par l'intermédiaire de ladite ou desdites interfaces réseau.

3. Ensemble combiné d'interrupteur d'éclairage et de thermostat (200) selon la revendication 1,
dans lequel ladite ou lesdites interfaces réseau sont en outre configurées pour communiquer avec un dispositif mobile (126) d'un hôte, exécutant une application de contrôle mobile de l'hôte, app, et le code de contrôle, lorsqu'il est exécuté, permet en outre :
de recevoir une demande de service et une clé d'authentification limitée dans le temps de la part de l'application de contrôle mobile de l'hôte ;
de vérifier la clé d'authentification limitée dans le temps par rapport à l'heure actuelle ; et
en réponse à la vérification de la clé d'authentification limitée dans le temps, d'émettre des instructions de contrôle vers ledit ou lesdits dispositifs internes (110), ou de renvoyer des informations sur l'état et
l'environnement à l'application de contrôle mobile de l'hôte.

4. Ensemble combiné d'interrupteur d'éclairage et de thermostat (200) selon la revendication 1,
dans lequel le dispositif de contrôle du climat est un climatiseur terminal emballé, PTAC, et ladite ou lesdites interfaces réseau sont configurées pour communiquer avec le PTAC via le câblage de contrôle du thermostat ou via un réseau personnel sans fil, WPAN, avec un module de contrôle et de surveillance du PTAC, couplé au PTAC.

5. Ensemble combiné d'interrupteur d'éclairage et de thermostat (200) selon la revendication 1,
dans lequel l'ensemble combiné d'interrupteur d'éclairage et de thermostat (200) est configuré pour être monté dans une boîte électrique murale et pour être alimenté par un câblage CA mural.

6. Ensemble combiné d'interrupteur d'éclairage et de thermostat selon la revendication 1,
dans lequel ledit ou lesdits dispositifs internes (110) comprennent un ou plusieurs dispositifs de détection ou des dispositifs audio/vidéo, A/V, et de divertissement, et ladite ou lesdites interfaces réseau sont configurées pour communiquer avec ledit ou lesdits dispositifs de détection ou les dispositifs A/V et de divertissement.

7. Ensemble combiné d'interrupteur d'éclairage et de thermostat (200) selon la revendication 1,
dans lequel ledit ou lesdits dispositifs internes (110) comprennent une serrure de porte Bluetooth Low Energy, BLE, alimentée par batterie, de la pièce, et ladite ou lesdites interfaces réseau comprennent une ou plusieurs interfaces BLE configurées pour communiquer par BLE avec la serrure de porte BLE alimentée par batterie.
